(19) Europäisches Patentamt
European Patent Office
Office européen des brevets

(11) Veröffentlichungsnummer : **0 119 465**
**B1**

(12) # EUROPÄISCHE PATENTSCHRIFT

(45) Veröffentlichungstag der Patentschrift : **13.12.89**

(51) Int. Cl.$^4$ : **C 09 B 67/22**, D 06 P 1/16, C 09 B 5/24

(21) Anmeldenummer : **84101521.7**

(22) Anmeldetag : **14.02.84**

(54) **Farbstoffmischung, Verfahren zu deren Herstellung und deren Verwendung zum Färben und Bedrucken von hydrophoben Fasermaterialien.**

(30) Priorität : **17.02.83 CH 893/83**

(43) Veröffentlichungstag der Anmeldung : **26.09.84 Patentblatt 84/39**

(45) Bekanntmachung des Hinweises auf die Patenterteilung : **13.12.89 Patentblatt 89/50**

(84) Benannte Vertragsstaaten : **CH DE FR GB IT LI**

(56) Entgegenhaltungen :
**FR–A– 1 277 713**
**US–A– 2 753 356**
**US–A– 3 268 552**
**PATENTS ABSTRACTS OF JAPAN, Band 7, Nr. 181 (C-180) [1326], 10. August 1983; & JP - A - 58 84 861 (SUMITOMO KAGAKU KOGYO K.K.) 21-05-1983**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Karlen, Urs, Dr.**
**Gartenweg 8**
**CH-4312 Magden (CH)**
Erfinder : **Putzar, Roland, Dr.**
**In den Reben 69**
**CH-4114 Hofstetten (CH)**
Erfinder : **Schaulin, Rudolf, Dr.**
**Schaeferstrasse 62**
**CH-4125 Riehen (CH)**

(74) Vertreter : **Zumstein, Fritz, Dr. et al**
**Bräuhausstrasse 4**
**D-8000 München 2 (DE)**

**EP 0 119 465 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist eine Farbstoffmischung die in Form von einheitlichen Mischkristallen vorliegt bestehend aus 1 Teil des Farbstoffes der Formel

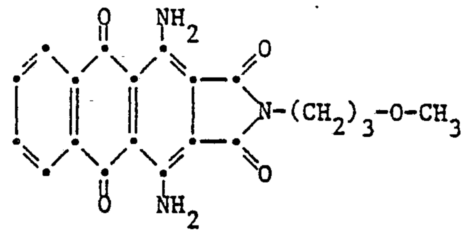

(I)

und 0,5-5 Teile des Farbstoffes der Formel

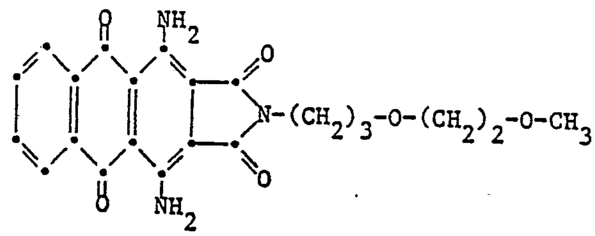

(II)

Ein bevorzugtes Mischungsverhältnis ist 1 Teil des Farbstoffes 1 und 0,8 bis 1,5 Teile des Farbstoffes II.

Die Einzelfarbstoffe der Formeln I und II sind bekannt (vgl. z. B : US-PS 2 753 356)

Die Einzelfarbstoffe der Formeln I und II besitzen ein schlechtes Aufbauvermögen und deren physikalische Mischung ist nur ungenügend dispersionsstabil. Aufgabe der Erfindung war es einen Farbstoff zur Verfügung zu stellen der die genannten Nachteile nicht aufweist. Die Lösung bot sich in einer Farbstoffmischung an die in Form von Mischkristallen vorliegt.

Man erhält die Mischkristalle der genannten Farbstoffmischung nach verschiedenen Verfahren, z. B.:

a) indem man die Anthrachinonverbindung der Formel

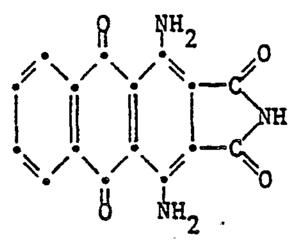

(III)

mit einem Gemisch von Aminen der Formeln

$$H_2N(CH_2)_3—O—(CH_2)_2—O—CH_3 \qquad (IV)$$

und

$$H_2N(CH_2)_3—O—CH_3 \qquad (V)$$

umsetzt. Diese Umsetzung erfolgt beispielsweise in einem wasserlöslichen organischen Lösungsmittel (z. B. Alkohole, wie Methanol, Aethanol, Glykol und vor allem n-Butanol) oder in einem wasserunlöslichen organischen Lösungsmittel (z. B. Benzol, Mono-, Di- und Trichlorbenzol, 1,1,1-Trichloräthan) bei erhöhter Temperatur, vorteilhaft unterhalb der Siedetemperatur des Lösungsmittels. Gegebenenfalls ist eine Nachbehandlung der Reaktionsmischung angezeigt; diese erfolgt beispielsweise durch Aufheizen der Reaktionsmischung in Wasser auf ca. 130 °C unter Druck; eine andere Möglichkeit der Umsetzung der Anthrachinonverbindung III mit den Aminen IV und V besteht darin, dass man diese in Wasser über 100 °C unter Druck durchführt. Die wässrige Suspension kann dabei derart hergestellt werden, dass man direkt von der Synthesesuspension ausgeht und das Farbstoffgemisch nicht isoliert, oder, dass man das Farbstoffgemisch isoliert und anschliessend in Wasser suspendiert; schliesslich sei noch die Möglichkeit genannt, dass man die Amine IV und V als Lösungsmittel per se verwendet und bei Raumtemperatur mit der Anthrachinonverbindung III umsetzt;

b) indem man ein Gemisch der Farbstoffe der Formeln I und II in Wasser oder in einem organischem, wasserlöslichen oder wasserunlöslichen Lösungsmittel (z. B. Chlorbenzol, Xylol, Trichloräthan) solange erhitzt bis eine Lösung vorliegt und diese dann abkühlen lässt, wobei die Farbstoffmischung ausfällt und abfiltriert werden kann ;

c) indem man eine Dicyanverbindung der Formel

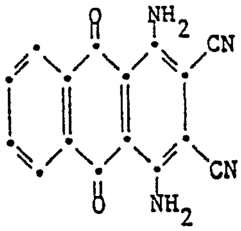

(VI)

mit einem Gemisch von Verbindungen der Formeln

$$HOCH_2(CH_2)_2—O—(CH_2)_2—O—CH_3 \quad (VII)$$

und

$$HOCH_2(CH_2)_2—O—CH_3 \quad (VIII)$$

in konz. Schwefelsäure umsetzt.

All die Ausgangsmaterialien der Formeln III bis VIII sind bekannt und können nach bekannten Methoden hergestellt werden.

Die erhaltenen Mischkristalle können zu einem Farbstoffpräparat oder zu einer wässrigen, fliessfähigen Suspension verarbeitet werden. Geeignete Dispergiermittel hierfür sind vorallem Dinaphthylmethansulfonsäuren, Kondensationsprodukte aus m-Kresol, Formaldehyd und Natriumbisulfit sowie Ligninsulfonate.

Die erfindungsgemässen Mischkristalle eignen sich zum Färben von hydrophoben Fasern wie synthetischen linearen Polyestern z. B. Polyäthylenglykolterephthalat oder chemisch analog aufgebauten Polymeren und halbsynthetischen Fasermaterialien, wie Cellulosetriacetat, bei Temperaturen von ungefähr 100 bis 220 °C.

In den folgenden Beispielen beziehen sich Angaben über Teile (T) sofern nicht anders vermerkt, auf das Gewicht. Temperaturen sind in Grad Celsius angegeben ; die Abkürzung Rf bedeutet Retentionsfactor und DC bedeutet Dünnschichtchromatogramm.

Das Röntgenbeugungsbild wurde für die Fig. 1-Fig. 6 mit CuK-α1-Strahlung (λ = 1.5405 Å) aufgenommen. Als Eichsubstanz wurde α-Quarz verwendet. Dessen d-Werte sind aus $a_0$ = 4.913 Å und $c_0$ = 5.405 Å berechnet.

Für Fig. 7 und Fig. 8 wurde das Röntgenbeugungsbild mit CuK-α-Strahlung (λ = 1,54178 Å) aufgenommen.

Die Intensität wird dabei in fünf Stufen wie folgt angegeben :

| Stufe | Intensität | Abkürzung |
|---|---|---|
| 1 | sehr stark | ss |
| 2 | stark | s |
| 3 | mittel | m |
| 4 | schwach | sch |
| 5 | sehr schwach | ssch |

Beispiel 1 : Die Verbindung der Formel

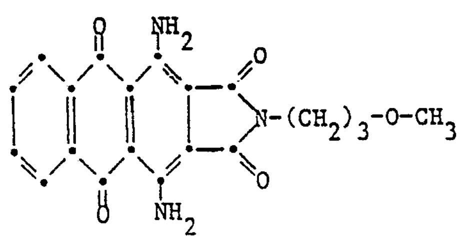

(I)

wird wie folgt erhalten:

In einem 350 ml Sulfierkolben legt man 170 T Chlorbenzol vor und gibt 61,4 T 1,4-Diaminoanthrachinon-2,3-dicarbonsäureimid 100 % und 35,6 T 3-Methoxy-propylamin 100 % zu. Das Reaktionsgemisch wird unter Rühren auf 115-120° erhitzt und 3 Stunden gehalten. Sobald das Reaktionsgemisch kein Ausgangsmaterial mehr enthält, kühlt man auf Raumtemperatur ab. Den ausgefallenen Farbstoff filtriert man ab und wäscht das Nutschgut mit 320 T Methanol in Portionen. Anschliessend wäscht man mit Wasser bis zum farblosen und neutralen Ablauf (ca. 1 000 T). Nach dem Trocknen bei 90° erhält man 71 T obiger Verbindung als reines Produkt mit einem Schmelzpunkt von 192-194° was einer theoretischen Ausbeute von 93 % entspricht.

Das Röntgenbeugungsdiagramm der Verbindung ist in Fig. 1 veranschaulicht. Daraus ergeben sich folgende Werte:

| d(Å) | 11.7 | 9.4 | 6.4 | 6.2 | 5.68 | 4.70 | 4.25 | 3.85 | 3.48 | 3.35 | 3.23 | 3.19 |
|---|---|---|---|---|---|---|---|---|---|---|---|---|
| Intensität | ss | ss | m | ss | m | m | s | m | ss | ss | s | m |

Beispiel 2: Die Verbindung der Formel

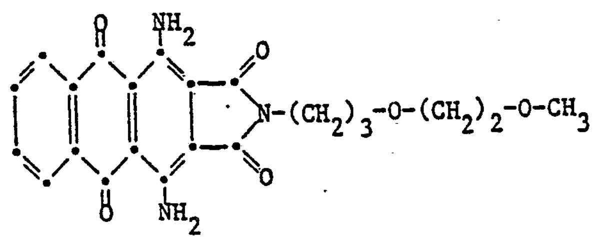

(II)

wird wie folgt erhalten:

In einem 350 ml Sulfierkolben legt man 170 T Chlorbenzol vor und gibt 61,4 T 1,4-Diaminoanthrachinon-2,3-dicarbonsäureimid 100 % und 47,9 T 3-(2-Methoxyäthoxy)-propylamin 100 % zu. Anschliessend wird unter Rühren auf 115-120° erhitzt und 3 Stunden gehalten. Wenn das Reaktionsgemisch kein Ausgangsmaterial mehr enthält, kühlt man auf Raumtemperatur ab. Den ausgefallenen Farbstoff filtriert man ab und wäscht das Nutschgut mit 320 T Methanol in Portionen. Mit Wasser wäscht man bis zum farblosen und neutralen Ablauf (ca. 800 T). Nach dem Trocknen bei 90° erhält man 77 T obiger Verbindung als reines Produkt mit einem Schmelzpunkt von 159-161° was einer theoretischen Ausbeute von 91 % entspricht.

Das Röntgenbeugungsdiagramm dieser Verbindung ist in Fig. 2 veranschaulicht. Daraus ergeben sich folgende Werte:

| d(Å) | 16.7 | 11.8 | 8.3 | 7.5 | 6.5 | 5.4 | 5.27 | 4.71 | 4.61 | 4.17 |
|---|---|---|---|---|---|---|---|---|---|---|
| Intensität | s | s | s | s | m | s | m | s | m | s |

| d(Å) | 4.04 | 3.75 | 3.59 | 3.54 | 3.46 | 3.39 | 3.37 | 3.32 | 3.09 | 2.99 |
|---|---|---|---|---|---|---|---|---|---|---|
| Intensität | m | m | s | s | s | ss | m | ss | ss | m |

Beispiel 3

490 T wasserfeuchtes 50 %iges wässeriges 1,4-Diaminoanthrachinon-2,3-dicarbonsäureimid werden in 220 T einer 0,25 %igen wässerigen Dispergator-Lösung (Kondensationsprodukt von Formaldehyd mit Dinaphthylmethandisulfonsäure-Natriumsalz) suspendiert. Bei 105° drückt man eine Mischung von 62 T 3-Methoxy-propylamin und 94 T 3-(2-Methoxy-äthoxy)-propylamin innert 30 Minuten zu. Nun rührt man das Reaktionsgemisch 3 Stunden bei 105° und zirka 4 Stunden bei 120° und ca. 1,7 bar Ueberdruck bis kein Ausgangsmaterial mehr nachweisbar ist. Das Reaktionsprodukt wird nach dem Verdünnen mit 310 Teilen Wasser noch handwarm abgesaugt und mit heissem Wasser bis zum praktisch farblosen Ablauf gewaschen. Man erhält nach dem Trocknen 320 T der brillantblauen Farbstoffmischung der Formeln

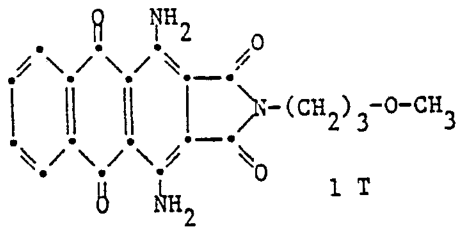

1 T (I)

und

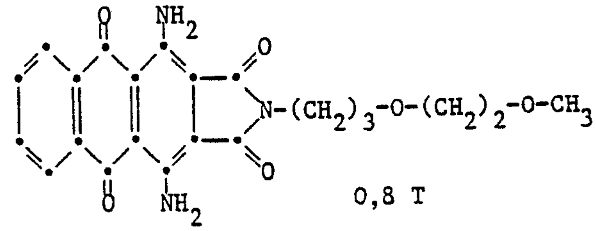

0,8 T (II)

(Die Rf-Werte im DC auf einer Polygramm SIL G-Schicht im Laufmittel Toluol : Methanol 9 : 1 betragen für das Methoxy-propylamin-derivat 0,85 und für das Methoxy-äthoxypropylamin-derivat 0,73.) Das Produkt schmilzt bei 175°. Fig. 3 veranschaulicht das Röntgenbeugungsdiagramm dieser Farbstoffmischung woraus sich folgende Werte ergeben :

| d(Å) | 15.1 | 8.8 | 8.2 | 5.52 | 5.35 | 4.66 diffus | 4.47 | 3.43 | 3.31 | 3.03 |
|---|---|---|---|---|---|---|---|---|---|---|
| Intensität | s | ss | s | s | s | m | m | s | ss | m |

Beispiel 4

Ein Gemisch aus 68 T 1,4-Diamino-anthrachinon-2,3-dicarbonsäure-imid, 125 T n-Butanol, 11 T 3-Methoxy-propylamin und 53 T 3-(2-Methoxy-äthoxy)-propylamin heizt man innert 1 Stunde auf 118°, wobei ab zirka 90° Ammoniakgas entweicht. Nach zirka 4 Stunden bei einer Reaktionstemperatur von 118° ist im Reaktionsgemisch praktisch kein Ausgangsmaterial mehr nachweisbar. Das Reaktionsprodukt wird nach dem Abkühlen bei konstanter Abkühlrate noch handwarm abgesaugt, mit 500 T n-Butanol und mit 1 200 T heissem Wasser gewaschen. Nach dem Trocknen erhält man 80 T des reinen, brillantblauen Farbstoffgemisches gemäss Beispiel 3 mit folgendem Mischungsverhältnis :

Komponente I : 1 Teil
Komponente II : 1,2 Teile

Das Produkt schmilzt bei 175°.

Fig. 4 veranschaulicht das Röntgenbeugungsdiagramm dieser Farbstoffmischung woraus sich folgende Werte ergeben :

| d(Å) | 15.2 | 8.9 | 8.2 | 3.39 | 3.33 |
|---|---|---|---|---|---|
| Intensität | ss | m | m | s | s |

Beispiel 5

Ein Gemisch aus 61 T 1,4-Diamino-anthrachinon-2,3-dicarbonsäure-imid, 21 T 3-Methoxy-propylamin, 48 T 3-(2-Methoxy-äthoxy)-propylamin und 70 T Wasser heizt man innert 2 Stunden auf die Rückflusstemperatur von 98° auf ; dabei beginnt ab zirka 70° Ammoniakgas zu entweichen. Anschliessend gibt man noch 70 Teile Wasser zu und verrührt während 2 Stunden am Rückfluss. Das Reaktionsprodukt wird kalt abgesaugt, mit 200 T kaltem und 1 000 T heissem Wasser bis zum farblosen Ablauf gewaschen. Nach dem Trocknen erhält man 77 T des reinen, brillantblauen Farbstoffgemisches gemäss Beispiel 3 mit folgendem Mischungsverhältnis :

Komponente I : 1 Teil
Komponente II : 1,2 Teile

Das Produkt schmilzt bei 175°. Das Röntgenbeugungsdiagramm der so erhaltenen Farbstoffmischung ist in Fig. 5 veranschaulicht. Daraus ergeben sich folgende Werte :

| d(Å) | 15.2 | 10.1 | 8.9 | 8.2 | 5.52 | 5.37 | 4.68 diffus | 4.46 | 3.42 | 3.31 |
|---|---|---|---|---|---|---|---|---|---|---|
| Intensität | ss | m | s | m | m | m | m | m | s | ss |

Beispiel 6

Ein Gemisch aus 44 T 1,4-Diamino-anthrachinon-2,3-dicarbonsäureimid, 7,3 T 3-Methoxy-propylamin, 16 T 3-(2-Methoxyäthoxy)-propylamin, 0,4 T Dispergator (Kondensationsprodukt von Formaldehyd mit Dinaphthylmethandisulfonsäure-Natriumsalz) und 135 T Wasser heizt man innert 1 Stunde auf 118° und rührt bei 118° und 1,7 bar Ueberdruck während zirka 8 Stunden bis kein Ausgangsmaterial mehr nachweisbar ist. Das Reaktionsgemisch wird noch handwarm abgesaugt und mit 500 T heissem Wasser bis zum farblosen Ablauf gewaschen. Nach dem Trocknen erhält man 57 T des brillantblauen Farbstoffgemisches gemäss Beispiel 3 mit folgendem Mischungsverhältnis :

Komponente I : 1 Teil
Komponente II : 1,5 Teile

Das Produkt schmilzt bei 173°.

In Fig. 6 ist das Röntgenbeugungsdiagramm der so erhaltenen Farbstoffmischung dargestellt, daraus ergeben sich folgende Werte :

| d(Å) | 15.4 | 8.9 | 8.2 | 3.40 | 3.33 |
|---|---|---|---|---|---|
| Intensität | ss | m | s | s | s |

Beispiel 7

Ein Gemisch aus 140 T 1,4-Diamino-anthrachinon-2,3-dicarbonsäure-imid, 340 T n-Butanol, 26 T 3-Methoxy-propylamin und 102 T 3-(2-Methoxy-äthoxy)-propylamin heizt man innert 2 Stunden auf 116°, wobei ab zirka 90° Ammoniakgas entweicht. Nach zirka 2 Stunden ist am Rückfluss kein Ausgangsmaterial mehr nachweisbar; das Reaktionsprodukt wird noch handwarm abgesaugt, mit 2 000 T n-Butanol, 150 T kaltem und 3 000 T heissem Wasser bis zum farblosen Ablauf gewaschen. Das feuchte Pressgut wird sodann in 1 000 T Wasser und 18 T Dispergator (Kondensationsprodukt von Formaldehyd mit Dinaphthylmethandisulfonsäure-Natriumsalz) angeschlämmt und noch während 24 Stunden bei 132° und 1,9 bar Ueberdruck verrührt. Das Produkt wird noch warm abgesaugt und mit 1 500 T heissem Wasser bis zum farblosen Ablauf gewaschen. Nach dem Trocknen erhält man 170 T des brillantblauen Farbstoffgemisches gemäss Beispiel 3 mit folgendem Mischungsverhältnis :

Komponente I : 1 Teil
Komponente II : 5 Teile

Das Produkt schmilzt bei 170°.

Fig. 7 veranschaulicht das Röntgenbeugungsdiagramm der so erhaltenen Farbstoffmischung, woraus sich folgende Werte ergeben :

| d(Å) | 16.2 | 10.8 | 8.9 | 5.41 | 4.46 | 3.41 | 3.30 | 3.03 |
|---|---|---|---|---|---|---|---|---|
| Intensität | ss | s | s | s | m | ss | ss | m |

Beispiel 8

In einem 750 ml Sulfierkolben legt man 500 T Chlorbenzol vor und trägt 65,19 T der Verbindung der Formel I feucht (50 T 100 %) und 85,76 T der Verbindung der Formel II feucht (50 T 100 %) ein. Mit 50 T Chlorbenzol wird nachgespült. Nun erhitzt man die Suspension auf 130° ; dabei destilliert das Wasser ab. Bei 130-132° (Rückfluss) ist der Farbstoff gelöst. Anschliessend senkt man die Temperatur innerhalb 10 Stunden auf 20-30°. Die ausgefallenen Farbstoffkristalle filtriert man ab und entfernt das Chlorbenzol mittels Wasserdampfdestillation. Nach erneuter Filtration und Trocknen bei 90° erhält man 96,2 T des Farbstoffgemisches gemäss Beispiel 3 wobei die Komponenten I und II im Verhältnis 1 : 1 vorliegen.

Fig. 8 veranschaulicht das Röntgenbeugungsdiagramm der so erhaltenen Farbstoffmischung woraus sich folgende Werte ergeben :

| d(Å) | 15.1 | 10.1 | 8.9 | 8.2 | 5.50 | 5.35 | 4.65 | 3.42 | 3.37 | 3.31 |
|---|---|---|---|---|---|---|---|---|---|---|
| Intensität | ss | m | s | s | m | m | m | m | s | ss |

Beispiel 9

10 T einer der nach den Beispielen 3-8 hergestellten Farbstoffmischung werden unter Zusatz von 5 T eines Kondensationsproduktes einer Naphthalinsulfonsäure mit Formaldehyd in 60 T Wasser mittels einer Glasperlenmühle bis zu einer ausreichenden Feinverteilung gemahlen. Anschliessend gibt man 15 T eines Oxyligninsulfonates zu und trocknet in einer Sprühapparatur.

In einem Druckfärbeapparat werden 40 T der so erhaltenen Farbstoffgranulate in 40 T Wasser von 70°, das 4 T eines Oleylpolyglykoläthers enthält, suspendiert. Der pH-Wert des Färbebades wird mit Essigsäure auf 4 bis 5 eingestellt. Damit färbt man einen Wickelkörper aus 2 000 T Polyäthylenglykolterephthalatgarn, indem man die Temperatur des Färbebades innerhalb von 30 Minuten von 70 auf 130° erhöht und 50 Minuten bei dieser Temperatur hält. Nach der üblichen Fertigstellung der Färbung erhält man einen egal intensiv brillant-blaugefärbten Wickelkörper.

## Patentansprüche

1. Mischkristalle einer Farbstoffmischung bestehend aus 1 Teil des Farbstoffes der Formel

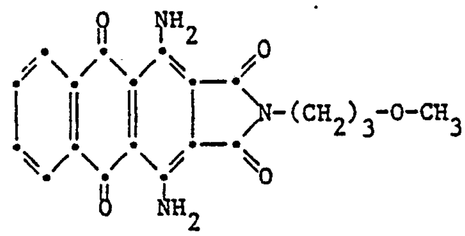

(I)

und 0,5-5 Teile des Farbstoffes der Formel

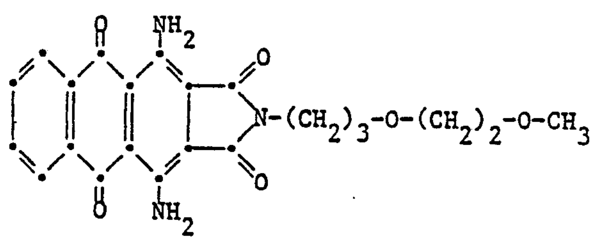

(II)

2. Verfahren zur Herstellung der Mischkristalle einer Farbstoffmischung gemäss Anspruch 1, dadurch gekennzeichnet, dass man :

a) die Anthrachinonverbindung der Formel

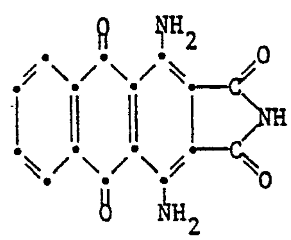

mit einem Gemisch von Aminen der Formeln

$$NH_2(CH_2)_3—O—(CH_2)_2—O—CH_3$$

und

$$NH_2(CH_2)_3—O—CH_3$$

umsetzt, oder

b) ein Gemisch der Farbstoffe der Formeln I und II in einem organischen Lösungsmittel löst, oder

c) eine Dicyanverbindung der Formel

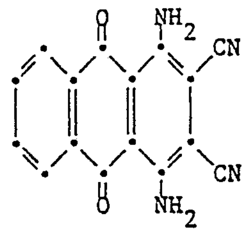

mit einem Gemisch von Verbindungen der Formeln

$$HO(CH_2)_3—O—(CH_2)_2—O—CH_3$$

und

$$HO(CH_2)_3—O—CH_3$$

umsetzt und aus den Reaktionsgemischen gemäss a), b) oder c) die Farbstoffe als Mischkristalle abscheidet, wobei man die Ausgangsverbindungen in solchen Mengenverhältnissen einsetzt, dass die entstehenden Mischkristalle auf 1 Teil des Farbstoffes der Formel (I) 0,5 bis 5 Teile des Farbstoffes der Formel (II) enthalten.

3. Verwendung der Farbstoffmischkristalle gemäss Anspruch 1 zum Färben und Bedrucken von hydrophoben Fasermaterialien.

## Claims

1. Mixed crystals of a dye mixture consisting of 1 part of the dye of the formula

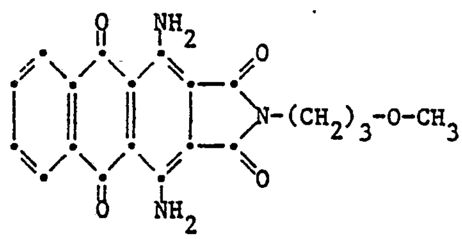

(I)

and 0.5-5 parts of the dye of the formula

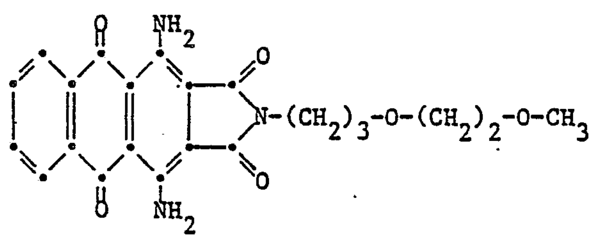

(II)

2. A process for producing the mixed crystals of a dye mixture according to claim 1 which process comprises

a) reacting the anthraquinone compound of the formula

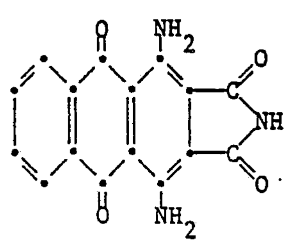

with a mixture of amines of the formulae

$$NH_2(CH_2)_3—O—(CH_2)_2—O—CH_3$$

and

$$NH_2(CH_2)_3—O—CH_3, \quad \text{or}$$

b) dissolving a mixture of the dyes of the formulae I and II in an organic solvent, or
c) reacting a dicyano compound of the formula

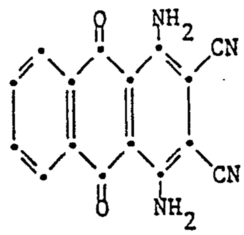

with a mixture of compounds of the formulae

$$HO(CH_2)_3—O—(CH_2)_2—O—CH_3$$

and

$$HO(CH_2)_3—O—CH_3$$

and separating the dyes from the reaction mixtures according to a), b) or c) in the form of mixed crystals, the starting compounds being employed in such ratios that the mixed crystals formed contain 0.5 to 5 parts of the dye of the formula (II) to one part of the dye of the formula (I).

3. Use of the dye mixed crystals according to claim 1 for dyeing and printing hydrophobic fibre materials.

**Revendications**

1. Cristaux mixtes d'un mélange de colorants, constitués d'une partie du colorant de formule

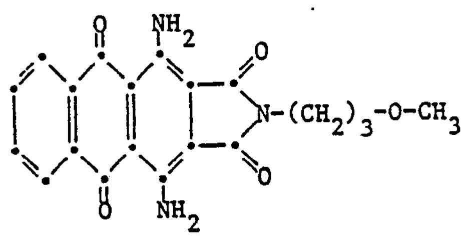

(I)

et de 0,5 à 5 parties du colorant de formule

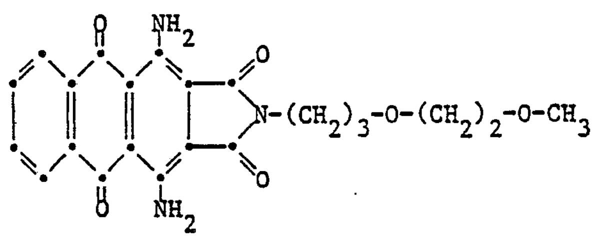

(II)

2. Procédé de préparation des cristaux mixtes d'un mélange de colorants selon la revendication 1, caractérisé en ce que :

a) on fait réagir le composé anthraquinone de formule

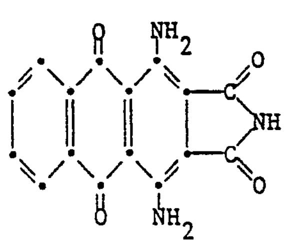

avec un mélange des amines de formules

$$NH_2(CH_2)_3—O—(CH_2)_2—O—CH_3$$

et

$$NH_2(CH_2)_3—O—CH_3$$

ou bien

b) on dissout un mélange des colorants de formules I et II dans un solvant organique, ou bien

c) on fait réagir un composé dicyano de formule

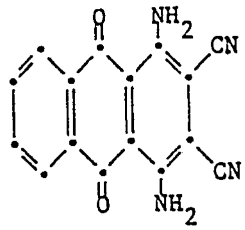

avec un mélange des composés de formules

$$HOCH_2(CH_2)_2—O—(CH_2)_2—O—CH_3$$

et

$$HOCH_2(CH_2)_2—O—CH_3$$

et on sépare, à partir des mélanges réactionnels selon a), b) ou c), les colorants sous forme de cristaux mixtes, les composés de départ ayant été introduits en des proportions telles que les cristaux mixtes formés contiennent, pour 1 partie du colorant de formule (I), de 0,5 à 5 parties du colorant de formule (II).

3. Utilisation des cristaux mixtes de colorants conformes à la revendication 1 pour la teinture et l'impression de matériaux fibreux hydrophobes.

Fig. 1

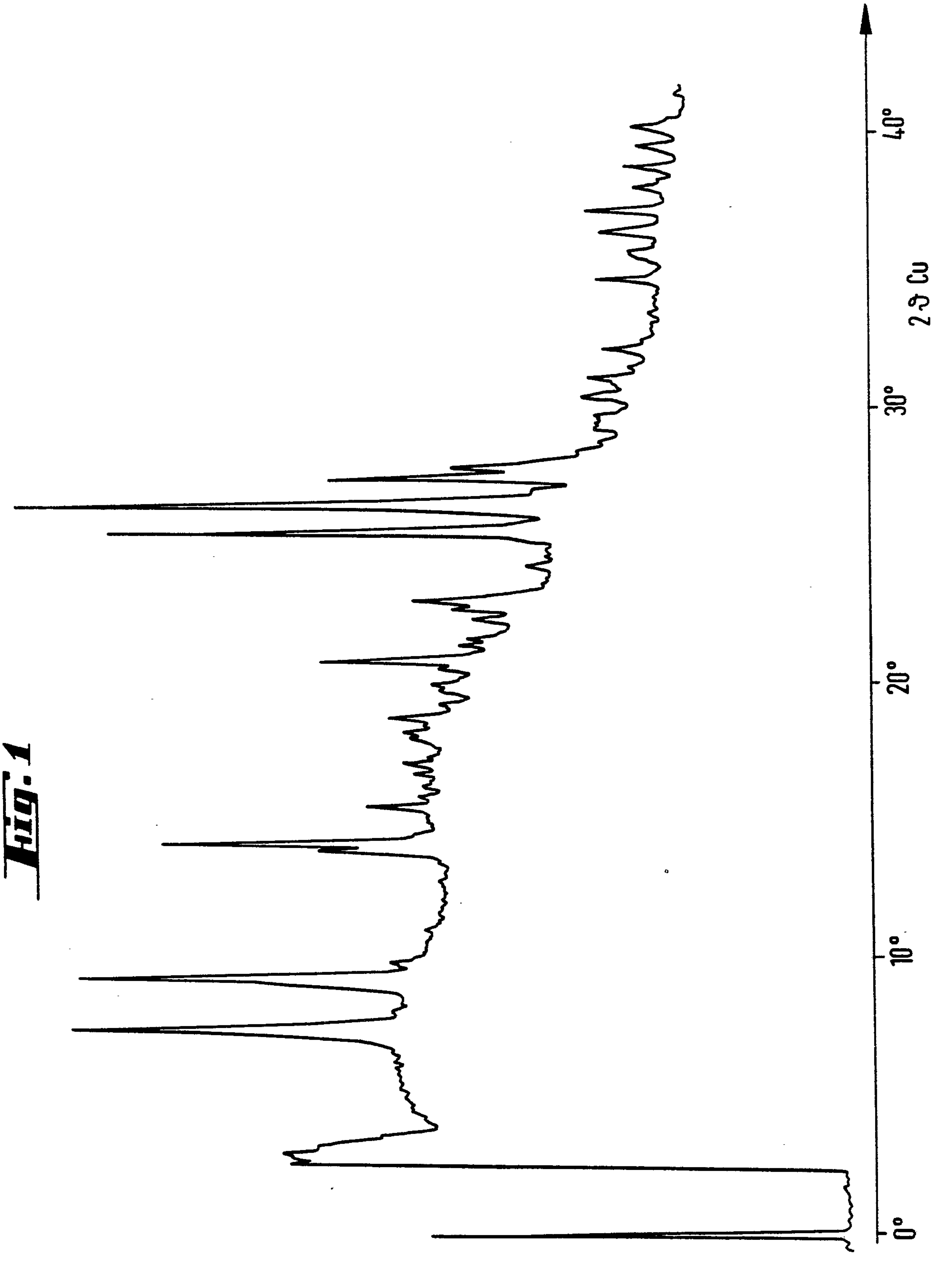

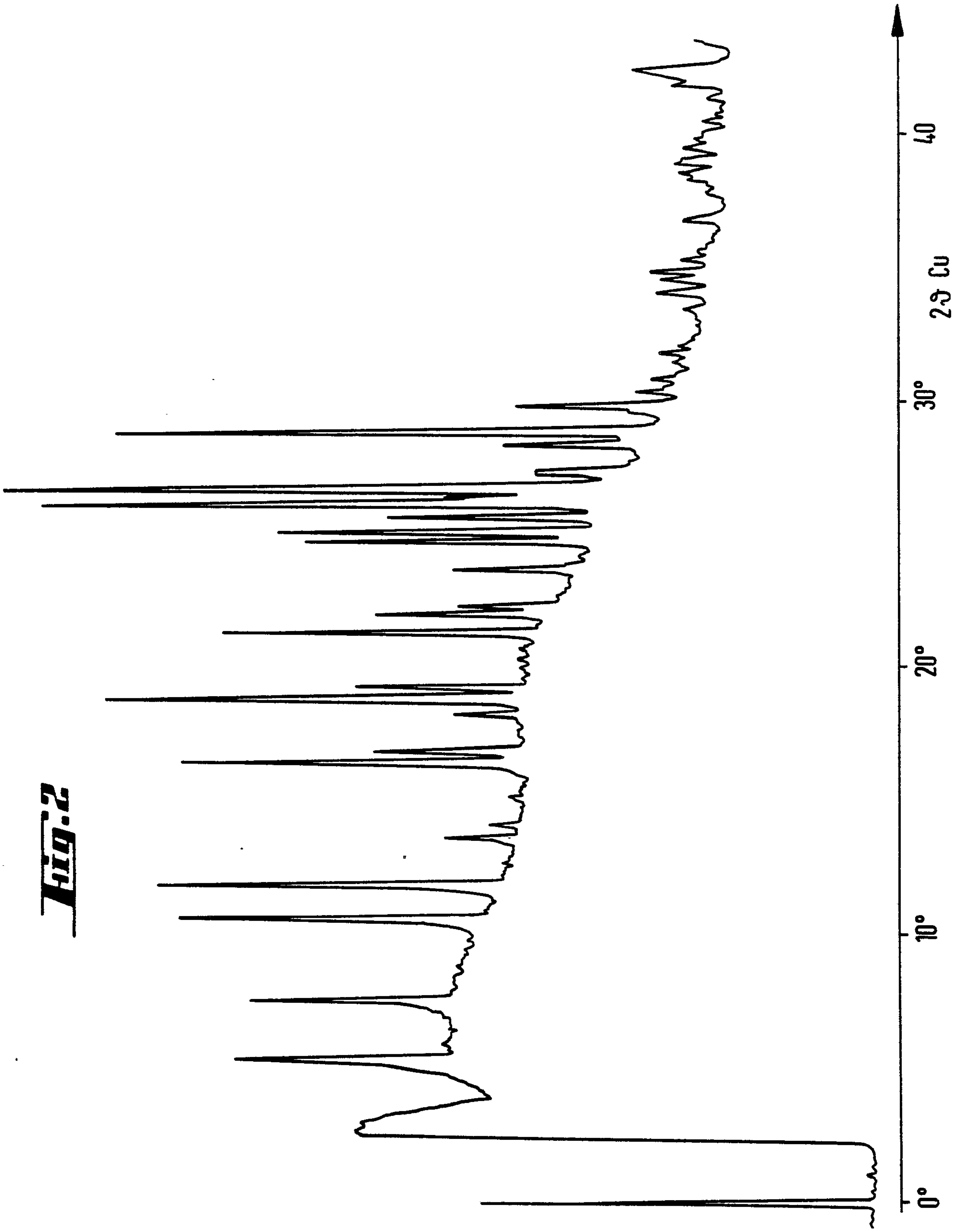


Fig.2

Fig. 3

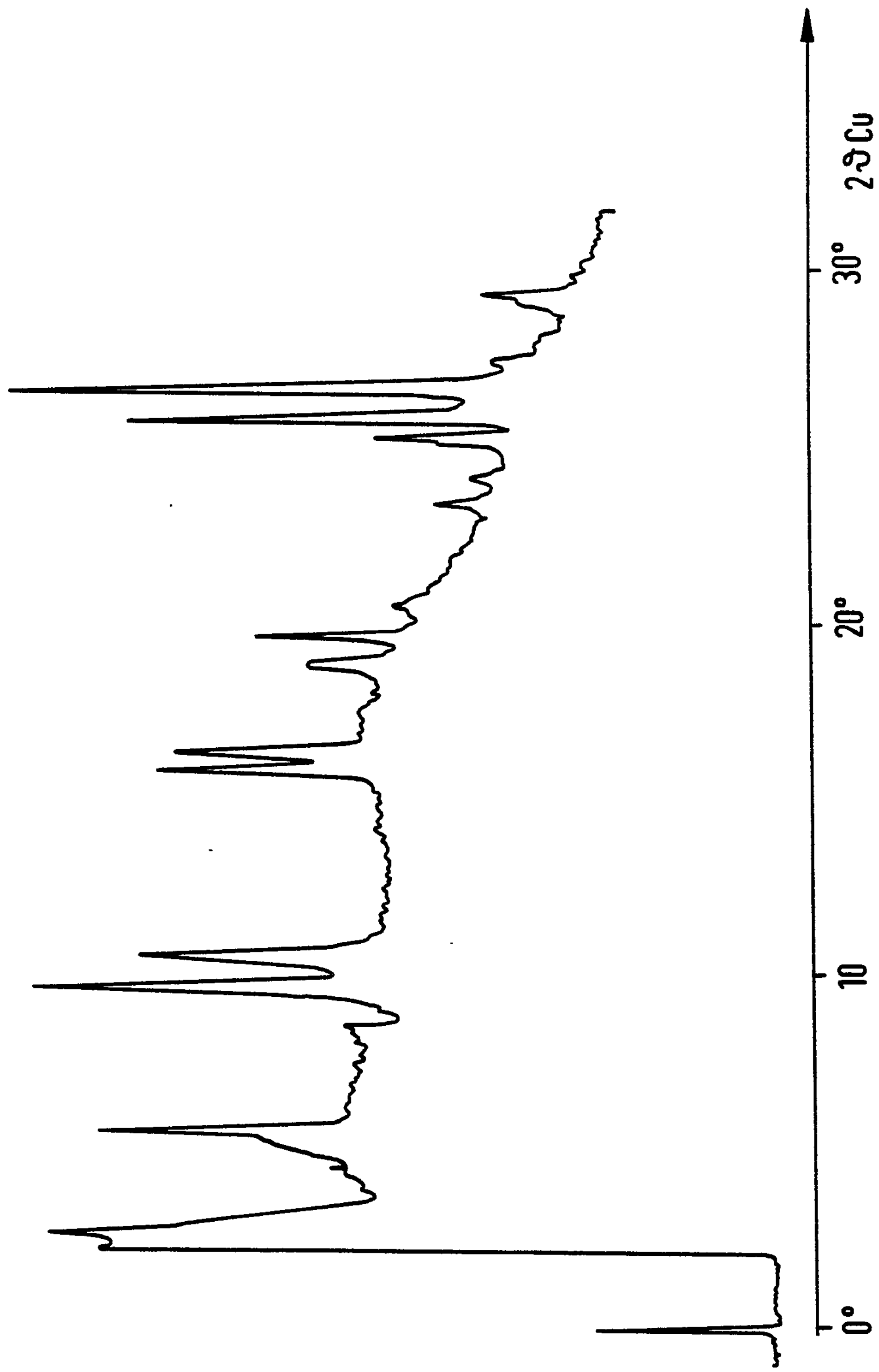

Fig. 4

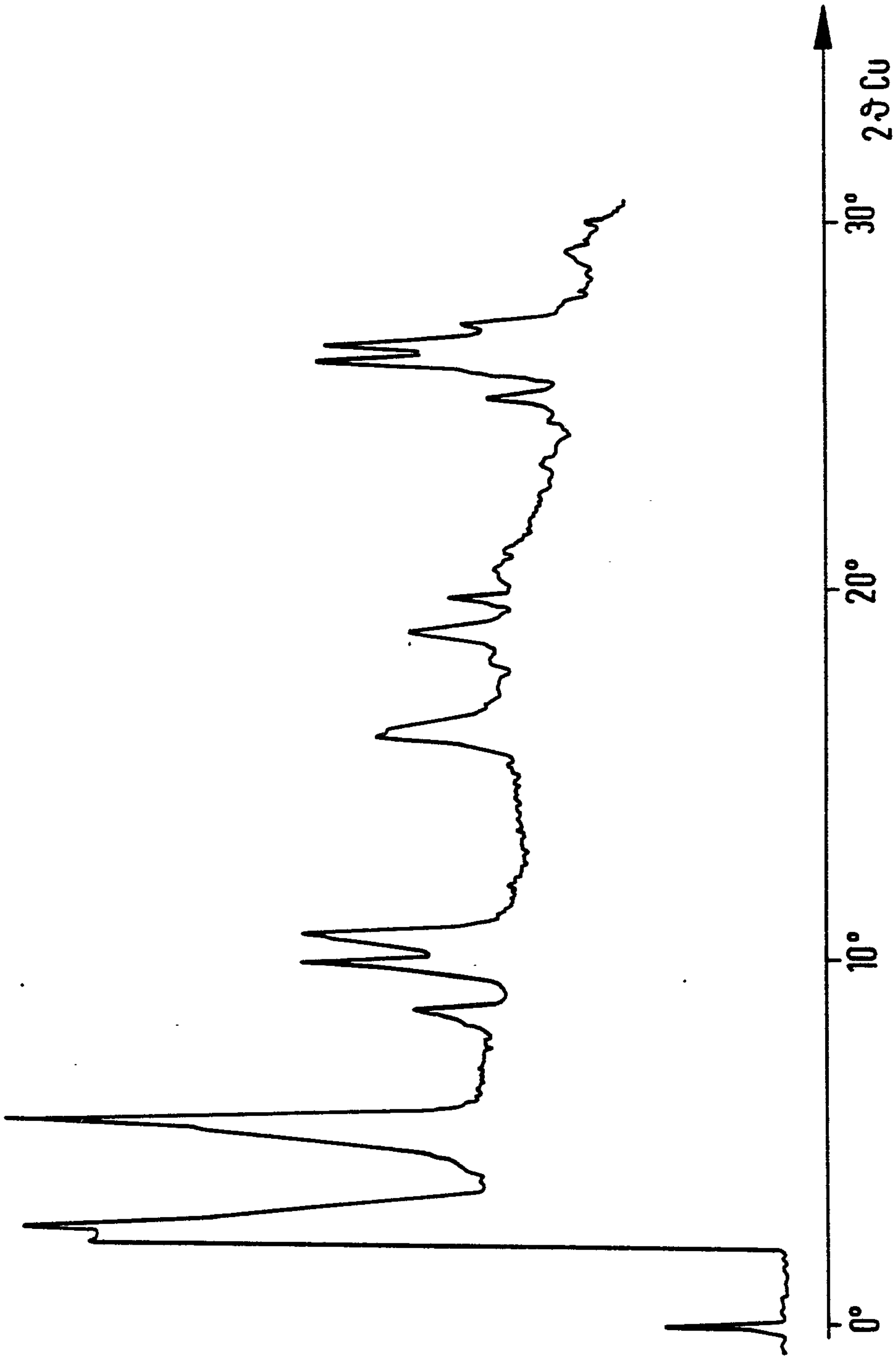

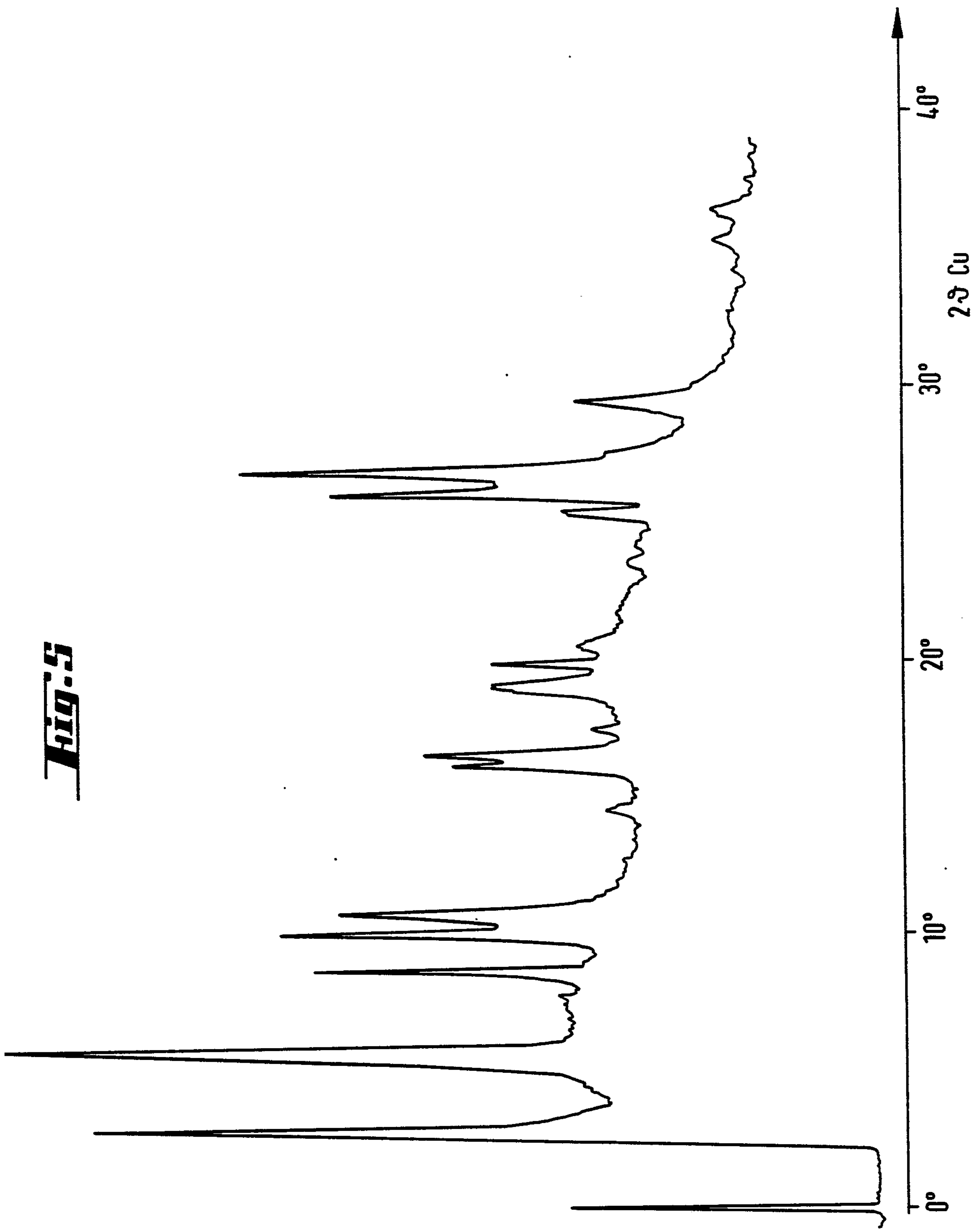


Fig. 5

Fig. 6

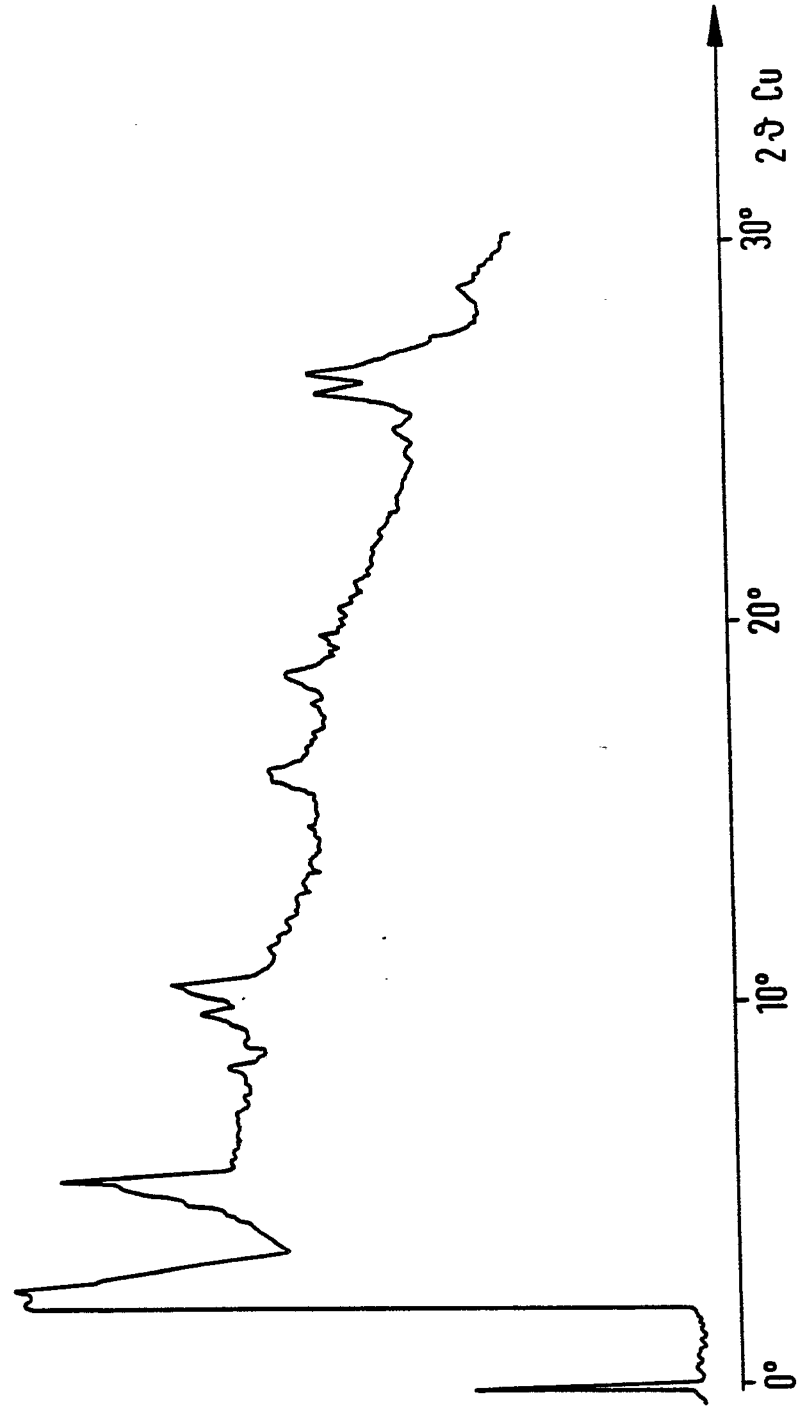

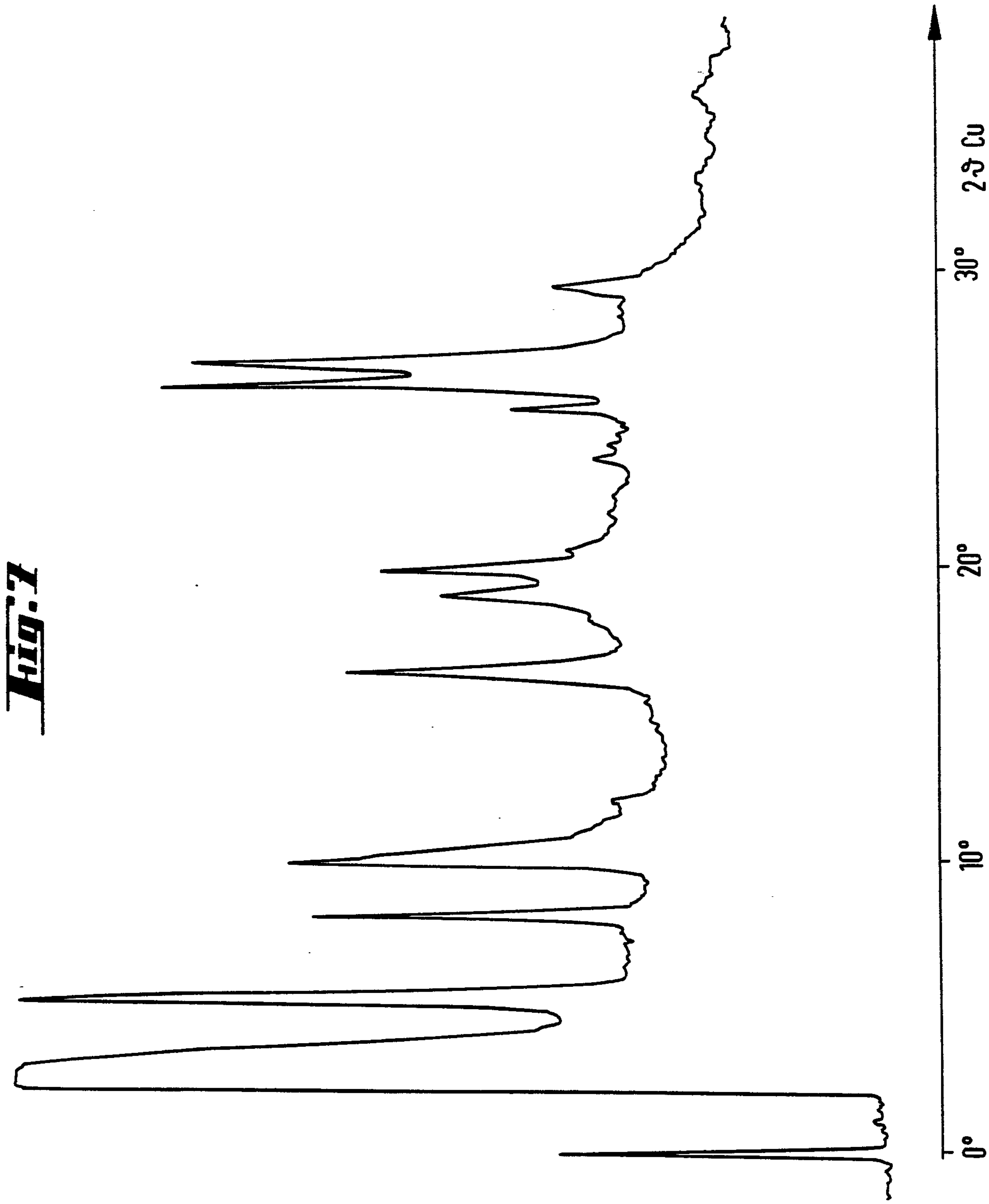


Fig.7

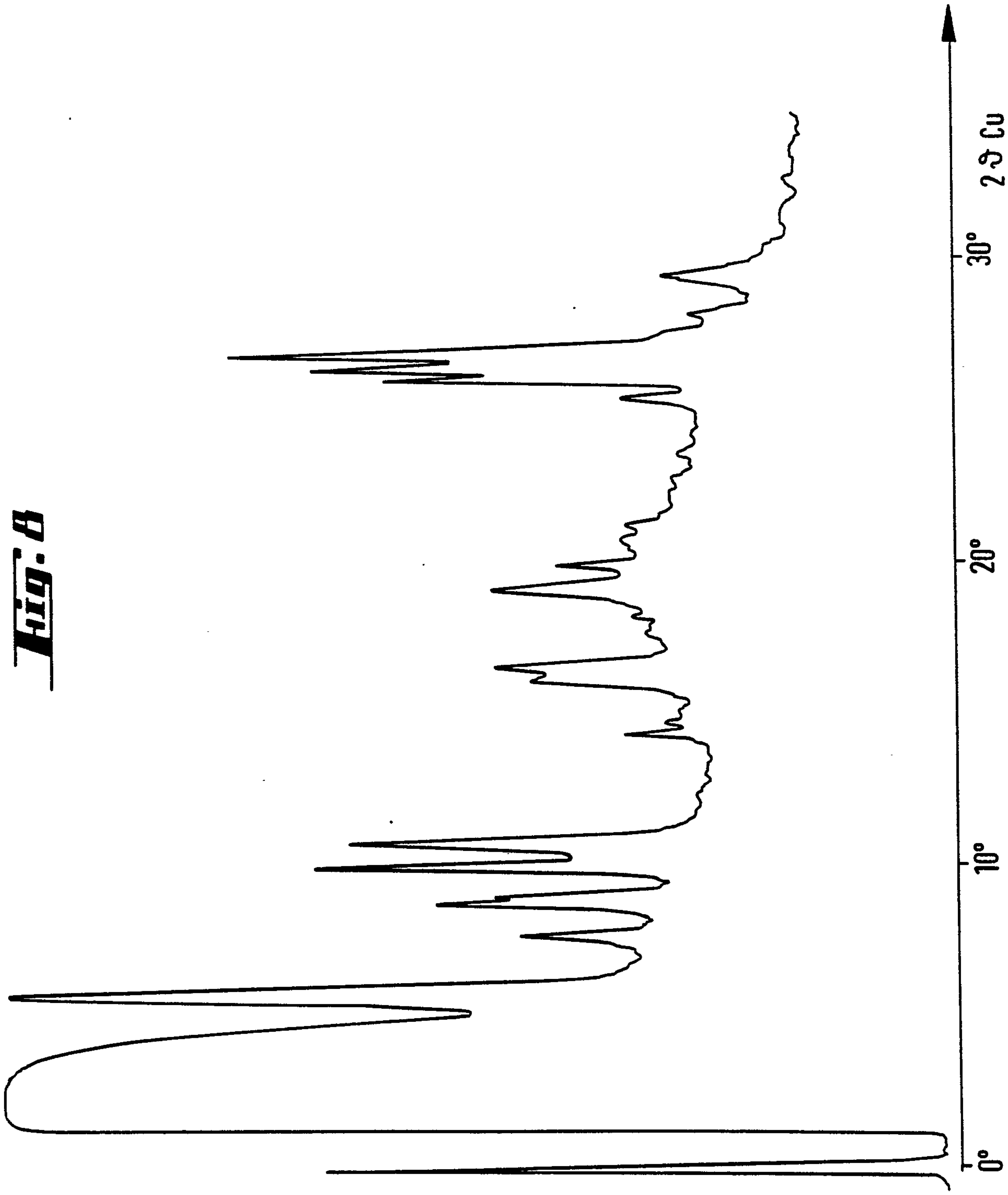


Fig. 8